# EUROPÄISCHE PATENTSCHRIFT

(11) **EP 2 982 015 B1**
(45) Veröffentlichungstag und Bekanntmachung des Hinweises auf die Patenterteilung: **15.02.2017**
(21) Anmeldenummer: 14712288.1
(22) Anmeldetag: 24.03.2014
(51) Int. Cl.: H02G 3/04, F16G 13/16

(54) **LEITUNGSFÜHRUNG AUS MEHRACHSIG ABWINKELBAREN GLIEDERN**
LINE GUIDE MADE OF MULTI-AXIALLY ANGLE-ADJUSTABLE LINKS
DISPOSITIF DE PASSAGE DE CÂBLES CONSTITUÉ D'ÉLÉMENTS PLIABLES SELON PLUSIEURS AXES

(30) Priorität: 05.04.2013 DE 202013101460 U
(43) Veröffentlichungstag der Anmeldung: 10.02.2016
(60) Teilanmeldung: 16201514.3
(73) Patentinhaber: Igus GmbH, 51147 Köln (DE)
(72) Erfinder: STEEGER, Ralf, 53797 Lohmar (DE)
(74) Vertreter: Lippert Stachow Patentanwälte Rechtsanwälte
(86) Internationale Anmeldenummer: PCT/EP2014/055798
(87) Internationale Veröffentlichungsnummer: WO 2014/161734

(56) Entgegenhaltungen:
- WO-A1-2004/093279
- DE-U1-202012 001 760

## Beschreibung

Die Erfindung betrifft allgemein eine Leitungsführung zur Führung und zum Schutz von Kabeln, Schläuchen oder dergleichen. Sie betrifft speziell eine Leitungsführung mit jeweils mehrachsig gegeneinander abwinkelbaren und gelenkig miteinander verbundenen Gliedern, welche in Längsrichtung der Leitungsführung hintereinander angeordnet sind. In einer gattungsgemäßen Leitungsführung weist ein Glied jeweils einen Innenteil mit korrespondierenden Gelenkverbindern sowie einen Mantelteil zur umfangsseitigen Begrenzung mindestens eines Führungskanals auf. Die Gelenkverbinder ermöglichen hierbei ein mehrachsiges, beispielsweise räumliches Abwinkeln bzw. Verschwenken der Glieder zueinander. Der Mantelteil umfasst mindestens ein Segment, welches mit einem Steg am Innenteil aufschwenkbar verbunden ist, um einen zugehörigen Führungskanal umfangsseitig bzw. von außen zugänglich zu machen.

Eine solche Leitungsführung ist aus der Gebrauchsmusterschrift DE 20 2012 001 760 U1 bekannt. Letztere hat gegenüber der aus der internationalen Patentanmeldung WO 2004/093279 bekannten Leitungsführung den Vorteil, dass das Einführen oder Herausnehmen der Kabel oder sonstiger Leitungen vereinfacht wird, indem das Aufschwenken einzelner Segmente der Mantelteile Zugang zu den innenliegenden Führungskanälen verschafft. Konstruktionsbedingt, insbesondere aufgrund der aufschwenkbaren Segmente, sind die Mantelteile jeweils mit Abstand in Längsrichtung hintereinander angeordnet und haben demnach eine relativ geringe Längsabmessung im Verhältnis zu den Kettengliedern. Die Schutzfunktion des Mantels beispielsweise gegen Späne, Funken oder dergleichen lässt demnach in bestimmten Anwendungen zu wünschen übrig.

Aus der DE 10 2010 032 920 ist eine weitere räumlich auslenkbare Leitungsführung bekannt. Diese bietet, ähnlich wie die Energieführungskette aus DE 20 2012 001 760 U1, keine geschlossene Umhüllung der Leitungen und somit einen geringen Schutz der Leitungen gegen Einwirkung von außen.

Die Führungseinrichtung gemäß WO 2004/093279 hat diesbezüglich den Vorteil, dass die dort vorgeschlagenen Glieder ein im Wesentlichen voll umfänglich und über die gesamte Länge geschlossen ummanteltes Gelenkrohr bilden können. Somit wird ein erhöhter Schutz der geführten Leitungen, Kabel, Schläuche usw. erzielt. Dies ist in vielen Industriemaschinen, z.B. bei spanabhebenden Maschinen oder beispielsweise bei einem Schweißroboter wünschenswert. Bei der Leitungsführung aus WO 2004/093279 sind in den Mantelteilen der Glieder schlitzförmige Durchbrechungen zur Einführung oder Entnahme der Leitungen vorgesehen. Das Einführen und Entnehmen von Leitungen durch derartige Durchbrechungen ist jedoch in der Praxis umständlich. Zudem reduzieren die Durchbrechungen in gewissem Maße den Schutz der geführten Leitungen.

Aufgabe der vorliegenden Erfindung ist es mithin, eine Leitungsführung vorzuschlagen, welche einerseits das Einführen und Entnehmen von Leitungen erleichtert und zugleich einen erhöhten Schutz der geführten Leitungen bietet.

Diese Aufgabe wird bei einer Leitungsführung gemäß dem Oberbegriff aus Anspruch 1 bereits dadurch gelöst, dass sich benachbarte Glieder mit ihren Mantelteilen in Längsrichtung zumindest teilweise überlappen und zugleich zwischen mindestens einem Segment des Mantelteils und einem Steg des Innenteils eine Gelenkanordnung mit mindestens zwei Freiheiten bzw. Freiheitsgraden vorgesehen ist. Die Gelenkanordnung ist erfindungsgemäß so ausgeführt, dass das Segment beim Aufschwenken auch quer zur Längsrichtung, z.B. nach außen beweglich ist. Die Gelenkanordnung gestattet dem Segment, insbesondere dessen dem Steg zugewandten Ende, unabhängig bzw. zusätzlich zur Schwenkbewegung eine weitere nach außen gerichtete Bewegungsrichtung, wodurch das Segment insbesondere im Bereich der Überlappung über ein benachbartes Segment hinweg aufschwenkbar ist.

Die vorgeschlagene Gelenkanordnung ermöglicht es somit, dass benachbarte Glieder sich mit den Mantelteilen über einen möglichst großen Längsabschnitt überlappen können, und die Mantelteile zugleich zumindest in Bereichen bzw. Segmenten aufschwenkbar sind.

Es ist anzumerken, dass ein voll umfänglich geschlossener Mantel grundsätzlich ohne weiteres mit einem außen liegenden Drehgelenk aufschwenkbar gestaltet werden könnte. Gelenkbestandteile außen an den Mantelteilen anzuordnen, würde jedoch hervorstehende Teile an der Außenoberfläche mit sich bringen, was unerwünscht ist. Zudem würde die Gelenkanordnung der Außeneinwirkung ausgesetzt, gegenüber welcher gerade die Schutzwirkung erzielt werden soll. Folglich sieht eine bevorzugte Ausführung vor, dass die Gelenkanordnung in Bezug auf den Mantelteil vollständig innen angeordnet ist und zwar derart, dass die Gelenkanordnung im geschlossenen Zustand geschützt ist.

Der Zugang kann umfangseitig bzw. über den Umfang des Mantels bzw. des Mantelteils erfolgen, wobei ein Zugriff auf den dem jeweiligen Mantelteil zugehörigen Führungskanal im Wesentlichen radial erfolgen kann.

Anzumerken ist auch, dass die Gelenkanordnung zum Aufschwenken von Bereichen oder Segmenten der Mantelteile von der mehrachsigen abwinkelbaren Gelenkverbindung zwischen den Gliedern zu unterscheiden ist. Mehrachsig abwinkelbar bedeutet im vorliegenden Falle eine Beweglichkeit der Glieder zueinander um zumindest zwei unabhängige Achsen, insbesondere auch eine räumliche Beweglichkeit durch ein Kugelgelenk.

In einer bevorzugten Ausführung ist die Gelenkanordnung als Kombination von zwei Gelenken, insbesondere zwei verschiedenen und räumlich getrennten Gelenktypen ausgeführt. Theoretisch ist jedoch auch eine Ausführung als Mehrfachgelenk mit zusammenfallenden Gelenken denkbar.

Vorzugsweise ist die Gelenkanordnung als Dreh- und Kurvenführung, z.B. als Kulissenführung mit drehbarem Eingriff, mit einer im Wesentlichen quer zur Drehachse verlaufenden Kurvenrichtung ausgeführt. Die Drehachse kann hierbei zweckmäßig im Wesentlichen parallel zu der Längsrichtung der Leitungsführung bzw. zur Führungsrichtung ausgeführt sein. Die ermöglichte Kurvenbewegung muss nicht zwingend translatorisch erfolgen, sondern kann auch eine Kurvenform haben, z.B. in Anlehnung an den Querschnitt bzw. die Kontur der Segmente. Alternativ zur bevorzugten Ausführung als Dreh- und Kurvenführung sind auch andere Gelenkanordnungen geeignet, die die Bewegung des Segments nach außen ermöglichen. So kommt etwa ein durch parallele Filmscharniere realisiertes Doppel-Scharniergelenk in Betracht. Ebenfalls geeignet wäre beispielsweise ein Drehauslegergelenk, ein Gelenk in der Art eines Topfband- bzw. Türscharnierbands oder eine andere Gelenkkombination, welche zusätzlich zur reinen Aufschwenkdrehung des Segments eine weitere Bewegung, z.B. in Richtung radial nach außen, ermöglicht.

Eine Dreh- und Kurvenführung lässt sich jedoch insbesondere im Spritzgussverfahren einfach und robust realisieren, wenn vorgesehen wird, dass an einem Ende des Segments zwei klauenförmige Gelenkbügel hervorstehen und jeweils entsprechende als Lagerzapfen geformte Gelenkbereiche am Steg vorgesehen sind, welche von den Gelenkbügeln drehbar umgriffen sind. Die klauenförmigen Gelenkbügel am Segment bilden hierbei eine langlochartige Linear- oder Kurvenführung für die Kurvenbewegung der Dreh- und Kurvenführung. Die Gelenkbereiche am Steg sind in der Art von Lagerzapfen geformt und der Führung in den Gelenkbügeln angepasst. Sie stehen am Steg im Wesentlichen axial, vorzugsweise parallel zu der Längsrichtung der Leitungsführung hervor.

Bei einer solchen Dreh- und Kurvenführung sieht eine Weiterbildung vor, dass die langlochartige Führung der Gelenkbügel im Wesentlichen in Umfangsrichtung des Mantelteils verläuft und so ein einfaches quasi radiales Hinausziehen des Segments im Zuge der Aufschwenkbewegung ermöglicht. Vorzugsweise ist zwischen beiden Endbereichen der Führung eine Einschnürung vorgesehen so, dass ein Einrasten der Dreh- und Kurvenführung in einer ersten geschlossenen Endstellung und in einer zweiten aufgeschwenkten Endstellung ermöglicht wird.

Eine Weiterbildung der Leitungsführung ermöglicht eine stabile Verbindung des Mantelteils mit dem Innenteil, indem an dem Ende des Segments, welches der Gelenkanordnung gegenüberliegt, ein Rastvorsprung vorgesehen ist, welcher am umfänglich nächsten Steg des Glieds einrastet. So kann an dem einen Ende durch die Gelenkanordnung und an dem anderen Ende durch die Rastverbindung eine zuverlässige Befestigung des Segments am Innenteil realisiert werden. Hierzu weist der Rastvorsprung vorzugsweise einen Rasthaken auf, welcher mit einer Rastkante am Steg zusammenwirkt. In einer zweckmäßigen Weiterbildung ist vorgesehen, dass der Rastvorsprung in einen Freiraum zwischen die beiden Gelenkbügel des umfänglich nächsten Segments hinein greift. Hierdurch wird eine optimale Nutzung des in Längsrichtung verfügbaren Bauraums für die Verbindung mit dem Innenteil gewährleistet. Zur Verbesserung der Schutzwirkung und auch zum Schutz der Gelenkanordnung, ist der Rastvorsprung vorzugsweise ferner so gestaltet, dass er den Freiraum zwischen beiden Gelenkbügeln schließt.

Zum Abmontieren des Segments vom Steg ist zweckmäßig vorgesehen, dass die Gelenkanordnung, insbesondere jeder der beiden Gelenkbügel, nach außen gerichtet eine oder mehrere Öffnungen aufweist, welche es ermöglichen, das Segment vom Steg abzumontieren. Zum erhöhten Schutz gegen Außeneinwirkung auf die geführten Leitungen und die Gelenkanordnung wird in dieser Ausführung ferner zweckmäßig vorgesehen, dass an dem der Gelenkanordnung gegenüberliegenden Ende des Segments einer oder mehrere Fortsätze angeordnet sind, welche so gestaltet sind, dass sie in geschlossener Stellung die eine oder mehrere Öffnungen des umfänglich nächsten Segments im Bereich der Gelenkanordnung jeweils abdecken. Zweckmäßig sind die Öffnungen in demjenigen Endbereich der langlochartigen Führung vorgesehen, welcher die Lagerzapfen in der aufgeschwenkten Endstellung des Segments umgreift. Hierdurch wird sichergestellt, dass die Segmente in aufgeschwenkter Stellung leicht von den Stegen abnehmbar sind, nicht jedoch in vollständig geschlossener Stellung.

In einer zum Schutz der geführten Leitungen bevorzugten Ausführungsform ist jedes Segment in der Längsrichtung in zwei kugelförmige Kalottenbereiche unterteilt. Ein erster Kalottenbereich weist hierbei einen Kugelmittelpunkt auf, welcher im Wesentlichen mit dem Zentrum eines kugelgelenkartigen Gelenkelements am Innenteil zusammenfällt. Der zweite Kalottenbereich ist so gestaltet, dass er den ersten Kalottenbereich eines benachbarten Glieds zumindest teilweise aufnehmen kann. Hierbei wird die erfindungsgemäße Gelenkanordnung, insbesondere die Dreh- und Kurvenführung, zweckmäßig ausschließlich über die Längsabmessung des ersten Kalottenbereichs zwischen dem ersten Kalottenbereich und dem Steg vorgesehen. Durch diese Formgebung wird eine maximale Überlappung zwischen ersten und zweiten Kalottenbereichen in sämtlichen Abwinklungsstellungen zwischen benachbarten Gliedern ermöglicht, da der zweite Kalottenbereich frei von Gelenkteilen ist und so vollständig über einen benachbarten ersten Kalottenbereich greifen kann.

Insbesondere bei kalottenförmiger Ausführung der Mantelteile ist es besonders zweckmäßig, wenn jeder Mantelteil mehrere, insbesondere drei identisch und einstückig hergestellte Segmente aufweist und dementsprechend am Innenteil, insbesondere am mittleren Längsabschnitt des Innenteils, in rotationssymmetrischer Anordnung für jedes Segment ein Steg, z.B. drei Stege einstückig angeformt sind. Um eine weitgehende Überlappung der Mantelteile und zugleich eine stabile Verbindung mit den Innenteilen zu gewährleisten, ist es hierbei besonders zweckmäßig, wenn die Stege nicht nur radial nach außen, sondern jeweils mit einer Komponente in Längsrichtung der Leitungsführung verlaufen. Hierdurch wird zugleich sichergestellt, dass der äußere Endbereich des Stegs gegenüber dem ersten Kalottenbereich des zugeordneten Segments liegt.

Eine robuste Gelenkanordnung lässt sich insbesondere dadurch realisieren, dass am äußeren Ende jedes Segments Teile der Gelenkanordnung, insbesondere als Lagerzapfen geformte Gelenkbereiche, so angeformt sind, dass ihre Wirklänge sich im Wesentlichen über die gesamte Längsabmessung des ersten Kalottenbereichs erstreckt. So kann beispielsweise für den Drehlagerbestandteil der Dreh- und Kurvenführung eine maximale Baulänge in Längsrichtung gewährleistet werden, ohne das Überlappen der Kalottenbereiche zu beeinträchtigen.

In einer zweckmäßigen Ausführung hat die Leitungsführung Glieder, bei welchen der Mantelteil aus mehreren identischen, vorzugsweise aus drei Segmenten aufgebaut ist. Jedes Segment ist vorzugsweise einstückig hergestellt. Zweckmäßig ist weiterhin jedes Segment für sich genommen aufschwenkbar und so gestaltet, dass bei geschlossenen Segmenten die Mantelteile benachbarter Glieder sich in sämtlichen Abwinklungsstellungen der Glieder zueinander und auch im Wesentlichen voll umfänglich übergreifen. So wird die bestmögliche Schutzwirkung erzielt, indem die Mantelteile ein über die gesamte Länge der Leitungsführung geschlossenes Schutzrohr bilden, welches die innenliegenden Führungskanäle und darin angeordneten Leitungen, Schläuche oder dergleichen schützend umgibt.

Zweckmäßig ist weiterhin vorgesehen, dass der Innenteil jedes Gelenks jeweils korrespondierende kardan- oder kugelgelenkartige Gelenkverbinder aufweist. Solche Gelenkverbinder sind einerseits zur mehrachsig, insbesondere räumlich abwinkelbaren Verbindung geeignet und gestatten zugleich die Aufnahme von Zugkräften zwischen den Gliedern der Leitungsführung. Der Innenteil kann mit den Stegen einstückig hergestellt sein, so dass jedes Glied in bevorzugter Gestaltung aus insgesamt vier Einzelteilen zusammengesetzt wird.

Weitere Vorteile und Merkmale der Erfindung werden nachfolgend anhand der Figuren näher erläutert. Hierbei zeigen:
- FIG.1A-1B:: perspektivische Ansichten eines Abschnitts eines bevorzugten Ausführungsbeispiels bei erfindungsgemäßer Leitungsführung mit vollständig geschlossenen Mantelteilen (FIG.1A) und mit aufgeschwenkten Segmenten der Mantelteile (FIG.1B;
- FIG.2A-2C:: Querschnitte quer zur Längsrichtung der Leitungsführung mit vollständig geschlossenen Segmenten (FIG.2A), mit einem teilweise aufgeschwenkten Segment (FIG.2B) und mit einem vollständig aufgeschwenkten Segment (FIG.2C);
- FIG.3A-3B:: eine Front- bzw. Perspektivansicht eines Segments der Leitungsführung gemäß FIG.1A-1B;
- FIG.4:: perspektivische Ansicht des Innenteils eines Glieds der Leitungsführung aus FIG.1A-1B.

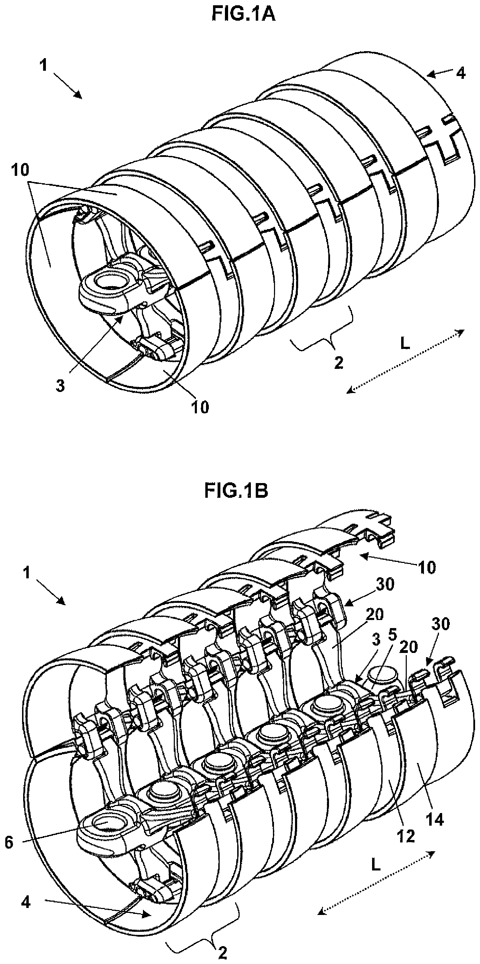

Eine bevorzugte Ausführungsform der erfindungsgemäßen Leitungsführung ist in FIG.1A-1B allgemein mit 1 bezeichnet. Die Leitungsführung 1 dient als Energieführungskette für Kabel, Schläuche oder dergleichen und besteht aus einer Vielzahl gelenkig miteinander verbundener Glieder 2. Jedes Glied 2 ist an beiden Stirnseiten weitestgehend offen und weist im geschlossenen Zustand eine rotationssymmetrische Außenkontur auf. Jedes Glied 2 besteht hierbei aus einem einstückig im Spritzguss-Verfahren herstellten Innenteil 3 und einem den Innenteil 3 umgebenden dreiteiligen Mantelteil 4. Am Innenteil 3 sind jeweils in der Längsrichtung L gegenüberliegend ein Kugelgelenkkopf 5 und eine korrespondierend geformte Kugelgelenkpfanne 6 vorgesehen, so dass die Glieder 2 durch Kugelgelenke miteinander verbunden sind und somit praktisch in allen Richtungen gegeneinander beweglich sind. Auch eine Abwinklung um lediglich zwei quer stehende Achsen ist im Rahmen der Erfindung als mehrachsig zu verstehen. Die Gelenkverbinder 5, 6 sind lösbar und zur Aufnahme von Zugkräften ausgeführt. Weitere Einzelheiten geeigneter Gelenkverbindungen werden nicht näher beschrieben, da deren Prinzip bereits aus der WO 2004/093279 bekannt ist.

Mittels der Kugelgelenke 5,6 wird die Leitungsführung 1 räumlich bzw. dreidimensional beweglich. So kann die Leitungsführung 1 insbesondere zur Versorgung des Endeffektors an einem mehrachsigen Industrieroboter (nicht gezeigt) eingesetzt werden, beispielsweise zur Versorgung des Schweißkopfes an einem 6-Achsen-Schweißroboter. Die Leitungsführung 1 ist vorzugsweise zwischen dem ortsfesten und dem beweglichen, zu versorgenden Anschluss (nicht gezeigt) durchgehend wie in FIG.1A-1B dargestellt ausgeführt. Die räumlich beweglichen Glieder 2 können auch nur abschnittsweise vorliegen.

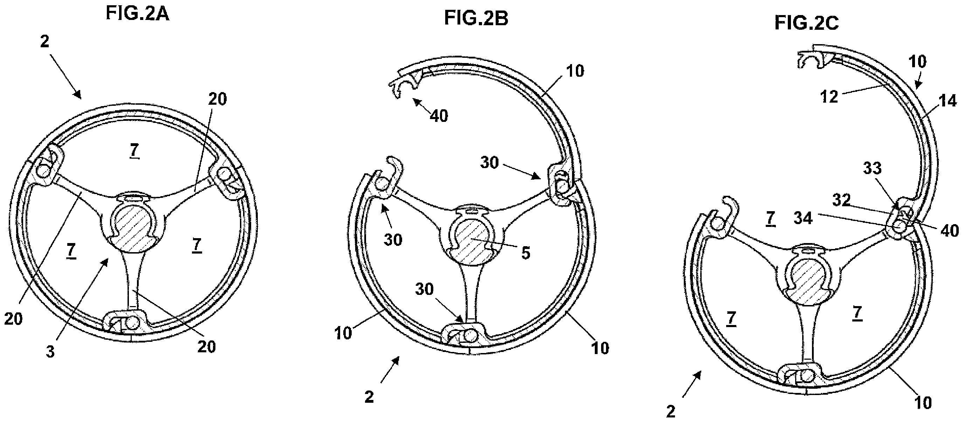

Wie aus FIG.1A am besten ersichtlich, bilden die Mantelteile 4 der einzelnen Glieder 2 im geschlossenen Zustand ein im Wesentlichen voll umfänglich geschlossenes Schutzrohr um die innenliegenden Führungskanäle 7 (FIG.2A). Durch Überlappung der Mantelteile 4 in Längsrichtung L ist die Leitungsführung 1 zudem über die gesamte Länge weitestgehend geschlossen.

Die Mantelteile 4 der Glieder 2 bilden folglich eine nahezu geschlossene Schutzumhüllung für die zu führenden Kabel, Schläuche oder dergleichen.

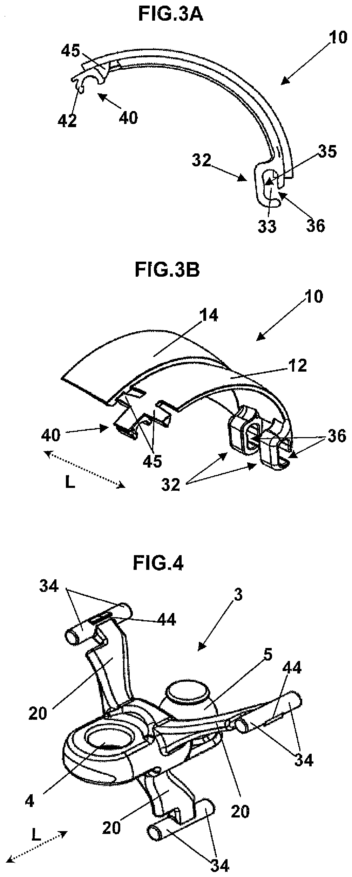

Jeder Mantelteil 4 begrenzt die Führungskanäle 7 umfangsseitig und besteht im bevorzugten Ausführungsbeispiel aus drei identisch hergestellten Segmenten 10, welche in FIG.3A-3B näher gezeigt sind. Die Segmente 10 sind im Spritzguss-Verfahren einstückig aus Kunststoff hergestellt und haben eine etwa sektorartige Gestalt. Wie näher aus FIG.3B ersichtlich, sind die Segmente 10 in Längsrichtung L unterteilt in einen ersten Kalottenbereich 12 und einen zweiten Kalottenbereich 14. Der erste Kalottenbereich 12 hat in etwa die Form des Sektors eines Kugelrings, dessen Kugelmittelpunkt im geschlossenen Zustand (FIG.1A) im Wesentlichen mit dem Zentrum der Gelenkkugel 5 des Innenteils 3 zusammenfällt. Hieran anschließend hat der zweite Kalottenbereich 14 einen in Längsrichtung L verlagerten Mittelpunkt und einen größeren Krümmungsradius, so dass er einen entsprechenden ersten Kalottenbereich 12 des benachbarten Glieds 2 aufnehmen und überdecken kann. Die Kalottenbereiche 12, 14 erzielen so die gewünschte Überlappung (FIG.1A), ohne die Gelenkigkeit der Glieder 2 zu beeinträchtigen.

Wie aus FIG.2A-2C am besten ersichtlich, ist zwischen jedem von drei Stegen 20 des Innenteils 3 und jedem der Segmente 10 jeweils eine Gelenkanordnung 30 vorgesehen, mittels welcher die Segmente 10 beweglich am Innenteil 3 gelagert sind und nach außen aufgeschwenkt werden können (FIG.2B-2C). So kann durch Aufschwenken einer Reihe von Segmenten 10 wahlweise Zugang zu jedem der Führungskanäle 7 geschaffen werden (FIG.1B).

Der Zugang erfolgt umfangseitig bzw. über den Umfang des Mantels bzw. des Mantelteils 4, indem in den dem jeweiligen Mantelteil 4 zugehörigen Führungskanal 7 im Wesentlichen radial zugegriffen werden kann.

Die Gelenkanordnung 30 zwischen jedem Segment 10 und jedem Steg 20 bietet im gezeigten Ausführungsbeispiel zwei Freiheitsgrade, nämlich eine Drehbewegung um eine Achse senkrecht zur Ebene der FIG.2A-2C und eine Verstell- bzw. Schiebebewegung des Segments 10 entlang einer Kurve innerhalb dieser Ebene, quer zur Längsrichtung L. Wie ein Vergleich zwischen FIG.2B und FIG.2C zeigt, ist die Gelenkanordnung 30 dergestalt, dass das Segment 10 beim Aufschwenken mit seinem innenliegenden Ende quasi radial nach außen über ein benachbartes Segment 10 heraus geschwenkt werden kann. Hierdurch wird das Aufschwenken der geschlossenen Mantelteile 4 ermöglicht und auch ein Quetschen und Verklemmen der sich überlappenden Kalottenbereiche 12, 14 verhindert, wie FIG.2C näher zeigt.

Jede Gelenkanordnung 30 ist im geschlossenen Zustand innen am entsprechenden Segment 10 angeordnet und wird somit durch den Mantelteil 4 weitgehend geschützt. Jede Gelenkanordnung 30 gemäß FIG.2A-2C entspricht bei ebener Betrachtung einer Kombination eines Drehgelenks und einer Kurvenführung bzw. einer Kulissenführung mit drehbarem Eingriffsglied. Diese Anordnung wird, wie ein Vergleich der FIG.3B und FIG.4 zeigt, realisiert, mit zwei in Umfangsrichtung hervorstehenden, klauenförmigen Gelenkbügeln 32, welche an einem Ende des Segments 10 angeformt sind, und mit korrespondierend als Lagerzapfen geformten Gelenkbereichen 34 am Endbereich jedes Stegs 20. Die Gelenkbereiche 34 stehen im Wesentlichen parallel zu der Längsrichtung L bzw. Führungsrichtung der Leitungsführung 1 zapfenartig hervor und sind hier durch einen etwa kreiszylindrischen Querbolzen am Steg 20 gebildet. Die klauenförmigen Gelenkbügel 32 umgreifen die Gelenkbereiche 34 an den Stegen drehbar. Die beiden Gelenkbügel 32 sind identisch gestaltet und parallel in Längsrichtung L fluchtend angeordnet. Die Gelenkbügel 32 bilden jeweils eine langlochartige Führung 33 für die Gelenkbügel 32. Die langlochartige Führung 33 ist im Wesentlichen in Umfangsrichtung des Mantelteils gerichtet und gibt so die Kurvenbewegung der Dreh- und Kurvenführung 30 vor, z.B. gemäß einer in Umfangsrichtung bzw. tangential gerichteten Geraden oder leicht gekrümmten Kurve. Die Drehachse der Gelenkbügel 32 um die Gelenkbereiche 34 ist etwa parallel zur Längsrichtung L gerichtet, die Kurvenrichtung der Führung 33 steht genau oder nahezu senkrecht hierzu (in der Ebene der FIG.3A). Im mittleren Bereich der die Führung 33 bildenden Aussparung der Gelenkbügel 32 ist eine Einschnürung 35 vorgesehen, welche mit den Gelenkbereichen 34 zusammenwirkt. Durch die Einschnürung 35 rasten die Gelenkbereiche 34 in den zwei gegenüberliegenden Endstellungen in der Führung 33 ein. Hierdurch können die Segmente 10 auch in offener Stellung gemäß FIG.1B gehalten werden. In den Endbereichen der Führung 33 sind die Gelenkbereiche 34 jedoch jeweils frei drehbar, um ein Auf- und Zuschwenken zu ermöglichen. Zum Aufschwenken ermöglicht die Führung 33 in den Gelenkbügel 32, dass damit das Segment 10 an den Gelenkbereichen 34 gehalten und dennoch im Bereich der Überlappung in Längsrichtung L über ein benachbartes Segment 10 hinweg aufschwenkbar ist. So kann, obschon die durch die Gelenkbereiche 34 definierte Drehachse innerhalb der Umhüllung liegt, gemäß FIG.2C ein Segment 10 jeweils über das umfänglich und das in Längsrichtung L benachbarte Segment 10 aufgeschwenkt werden. Insbesondere kann der Kalottenbereich 14 des einen Segments 10 über den Kalottenbereich 12 des Längsrichtung L benachbarten Segments nach außen hinweg geöffnet werden. An jedem Gelenkbügel 32 ist ferner nach außen gerichtet eine Öffnung 36 vorgesehen, die zum Abmontieren des Segments 10 vom Steg 20 dient. Die Öffnungen 36 liegen in dem Endbereich der Führung 33, welcher die zapfenförmigen Gelenkbereiche 34 in der aufgeschwenkten Endstellung umgreift. So kann nur in dieser Stellung (FIG.1B) das Segment 10 leicht abgenommen werden. Entsprechend der zuvor beschriebenen Funktionen der Gelenkbügel 32, sind die Segmente 10 aus einem elastisch verformbaren Kunststoff hergestellt, ggf. aus weicherem Material als die Innenteile 3.

FIG.3A-3B zeigen ferner einen am aufschwenkbaren Ende des Segments 10 angeformten Rastvorsprung 40 mit einem Rasthaken 42. Wie FIG.1A zeigt, greift der Rastvorsprung 40 jeweils in den Freiraum zwischen die beiden Gelenkbügel 32 des umfänglich nächstliegenden Segments 10 und ist so gestaltet, dass er diesen Freiraum nahezu vollständig abschließt. Der Rasthaken 42 verrastet an einer Rastkante 44, welche am Steg 10, genauer an dem die Gelenkbereiche 34 bildenden zylindrischen Bolzen, etwa mittig vorgesehen ist. Ferner umgreift der Rastvorsprung 40 klauenartig den mittleren Bereich am Steg 20 zwischen den Gelenkbereichen 34, wodurch die Segmente 10 in der Art einer formschlüssigen Klemm- bzw. Clipsverbindung stabil an den Stegen 20 gehalten werden. Quer zum Rastvorsprung 40 sind in Längsrichtung L jeweils zwei Fortsätze 45 am Segment 10 angeformt, welche als Abdeckung der Öffnungen 36 gestaltet sind, und diese bei geschlossenen Mantelteilen 4 nahezu vollständig abschließen.

Aus FIG.1B ergibt sich, dass die Gelenkanordnung 30 jeweils ausschließlich im Längsbereich zwischen dem ersten Kalottenbereich 12 der Segmente 10 und dem Steg 10 vorgesehen ist, damit die Überlappung der Kalottenbereiche 12, 14 einerseits und die Baugröße der Gelenkanordnung 30 in Längsrichtung 30 andererseits jeweils größtmöglich ausfallen kann, wie aus FIG.1A-1B ersichtlich.

FIG.4 zeigt den Innenteil 3 eines Glieds 2 mit drei im Bogenwinkel von 120° rotationssymmetrisch einstückig angeformten streben- bzw. speichenartigen Stegen 20, welche sich vom mittleren Teil mit den Gelenkverbindern 5, 6 radial nach außen erstrecken. Jeder Steg 20 dient als Halterung für genau ein entsprechendes Segment 10 und grenzt mit diesem Segment 10 und dem in Umfangsrichtung nächstliegenden Steg 20 einen von drei Führungskanälen 7 der Leitungsführung 1 ab. Um die Gelenkbereiche 34 gegenüber des ersten Kalottenbereichs 12 zu positionieren, verlaufen die Stege 20 nicht nur radial nach außen, sondern jeweils geschwungen mit einer Komponente in Längsrichtung L. So kann sich auch die Wirklänge in Längsrichtung L der Gelenkbereiche 34 gegen ein Kippen der Segmente 10 im Wesentlichen über die gesamte entsprechende Abmessung des ersten Kalottenbereichs 12 erstrecken.

Die drei Segmente 10 des Mantelteils 4 sind identisch geformt. Wie aus FIG.1B hervorgeht, sind die Segmente 10 so gestaltet, dass bei geschlossenen Segmenten 10 die Mantelteile 4 benachbarter Glieder 2 sich mit den Kalottenbereichen 12, 14 (hier ist nur die gerade Anordnung gezeigt) bis auf verbleibende konstruktionsbedingte Spalten vollumfänglich übergreifen. Durch die kugelförmige Gestalt und ausreichende Überlappung in Längsrichtung L, bilden die Mantelteile 4 in sämtlichen Abwinklungsstellungen eine geschlossene Umhüllung um die Führungskanäle 7 und den darin befindlichen Leitungen (nicht gezeigt).

### Bezugzeichenliste

- 1: Leitungsführung
- 2: Glied
- 3: Innenteil
- 4: Mantelteil
- 5: Kugelgelenkkopf
- 6: Kugelgelenkpfanne
- 7: Führungskanal
- 10: Segment
- 12: erster Kalottenbereich
- 14: zweiter Kalottenbereich
- 20: Steg
- 30: Gelenkanordnung
- 32: Gelenkbügel
- 33: langlochartige Führung
- 34: Gelenkbereich
- 35: Einschnürung
- 36: Öffnung
- 40: Rastvorsprung
- 42: Rasthaken
- 44: Rastkante
- 45: Fortsatz
- L: Längsrichtung

## Patentansprüche

1. Leitungsführung (1) mit jeweils mehrachsig gegeneinander abwinkelbaren, gelenkig miteinander verbundenen Gliedern (2), welche in Längsrichtung (L) der Leitungsführung (1) hintereinander angeordnet sind, wobei ein Glied (2) jeweils einen Innenteil (3) mit korrespondierenden, mehrachsig abwinkelbaren Gelenkverbindern (5, 6) und einen Mantelteil (4) zur umfangsseitigen Begrenzung mindestens eines Führungskanals (7) aufweist, wobei der Mantelteil (4) mindestens ein Segment (10) umfasst, welches mit einem Steg (20) am Innenteil (3) aufschwenkbar verbunden ist, um einen zugehörigen Führungskanal (7) umfangsseitig zugänglich zu machen;
**dadurch gekennzeichnet,**
**dass** sich benachbarte Glieder (2) mit ihren Mantelteilen (4) in der Längsrichtung (L) überlappen; und
**dass** zwischen dem mindestens einen Segment (10) und dem Steg (20) eine Gelenkanordnung (30) mit mindestens zwei Freiheitsgraden vorgesehen ist, durch welche das Segment (10) beim Aufschwenken quer zu der Längsrichtung (L), insbesondere nach außen, beweglich gelagert ist.

2. Leitungsführung nach Anspruch 1, **dadurch gekennzeichnet,**
**dass** die Gelenkanordnung (30) in Bezug auf den Mantelteil (4) innen angeordnet ist.

3. Leitungsführung nach Anspruch 1 oder 2, **dadurch gekennzeichnet, dass** die Gelenkanordnung (30) als Kombination von zwei Gelenken ausgeführt ist, insbesondere als Dreh- und Kurvenführung mit einer quer zur Drehachse verlaufenden Kurvenrichtung, wobei die Drehachse vorzugsweise im Wesentlichen parallel zu der Längsrichtung (L) gerichtet ist.

4. Leitungsführung nach Anspruch 3, **dadurch gekennzeichnet,**
**dass** an einem Ende des Segments (10) zwei klauenförmige Gelenkbügel (32), welche eine langlochartige Führung (33) für die Kurvenbewegung der Dreh- und Kurvenführung bilden, hervorstehen und jeweils entsprechende als Lagerzapfen geformte Gelenkbereiche (34) drehbar umgreifen, welche am Steg (20) hervorstehen.

5. Leitungsführung nach Anspruch 4, **dadurch gekennzeichnet,**
**dass** die langlochartige Führung (33) im Wesentlichen in Umfangsrichtung des Mantelteils verläuft und vorzugsweise zwischen beiden Endbereichen der Führung eine Einschnürung (35) aufweist zum Einrasten in zwei Endstellungen.

6. Leitungsführung nach einem der Ansprüche 1 bis 5,
**dadurch gekennzeichnet, dass** an dem der Gelenkanordnung (30) gegenüberliegenden Ende des Segments (10) ein Rastvorsprung (40), vorzugsweise mit einem Rasthaken (42), vorgesehen ist, welcher am umfänglich nächsten Steg, vorzugsweise an einer Rastkante (44) am Steg, einrastet.

7. Leitungsführung nach Anspruch 6, **dadurch gekennzeichnet,**
**dass** der Rastvorsprung (40) in einen Freiraum zwischen die beiden Gelenkbügel (32) des umfänglich nächsten Segments greift.

8. Leitungsführung nach einem der vorhergehenden Ansprüche, insbesondere nach Anspruch 7, **dadurch gekennzeichnet, dass** die Gelenkanordnung (30), insbesondere jeder Gelenkbügel (32), nach außen mindestens eine Öffnung (36) aufweist zum Abmontieren des Segments (10) vom Steg (20) und dass an dem der Gelenkanordnung (30) gegenüberliegenden Ende des Segments mindestens ein Fortsatz (45) vorgesehen ist zum Abdecken der Öffnung des umfänglich nächsten Segments.

9. Leitungsführung nach Anspruch 8, **dadurch gekennzeichnet,**
**dass** die Öffnung (36) in einem Endbereich der Gelenkanordnung (30) vorgesehen ist, welcher der aufgeschwenkten Endstellung entspricht.

10. Leitungsführung nach einem der vorhergehenden Ansprüche,
**dadurch gekennzeichnet, dass** jedes Segment (10) in der Längsrichtung in zwei kugelförmige Kalottenbereiche (12, 14) unterteilt ist, wobei der erste Kalottenbereich (12) einen Kugelmittelpunkt aufweist, welcher im Wesentlichen mit dem Zentrum eines kugelgelenkartigen Gelenkelements (5) am Innenteil (3) zusammenfällt und der zweite Kalottenbereich (14) den ersten Kalottenbereich (12) des benachbarten Glieds (2) zumindest teilweise aufnehmen kann, und dass die Gelenkanordnung (30), insbesondere die Dreh- und Kurvenführung, ausschließlich zwischen dem ersten Kalottenbereich (12) und dem Steg (20) vorgesehen ist.

11. Leitungsführung nach Anspruch 10, **dadurch gekennzeichnet,**
**dass** der Mantelteil (4) jedes Glieds (2) mehrere, insbesondere drei identisch und einstückig hergestellte Segmente (10) aufweist und am Innenteil (3), insbesondere am mittleren Längsabschnitt des Innenteils (3), rotationssymmetrisch mehrere, insbesondere drei Stege (20) einstückig angeformt sind.

12. Leitungsführung nach Anspruch 11, **dadurch gekennzeichnet,**
**dass** die Stege (20) radial nach außen und jeweils mit einer Komponente in Längsrichtung (L) verlaufen.

13. Leitungsführung nach Anspruch 11 oder 12, **dadurch gekennzeichnet, dass** am äußeren Ende jedes Stegs (10) Teile der Gelenkanordnung (30), insbesondere als Lagerzapfen geformte Gelenkbereiche (34), angeformt sind, deren Wirklänge sich im Wesentlichen über die gesamte Abmessung in Längsrichtung (L) des ersten Kalottenbereichs (12) erstrecken.

14. Leitungsführung nach einem der vorhergehenden Ansprüche,
**dadurch gekennzeichnet, dass** der Mantelteil (4) aus mehreren identischen, vorzugsweise aus drei Segmenten (10) aufgebaut ist, jedes Segment (10) vorzugsweise einstückig hergestellt ist, und jedes Segment (10) aufschwenkbar und so gestaltet ist, dass bei geschlossenen Segmenten (10) die Mantelteile (4) benachbarter Glieder (2) sich in sämtlichen Abwinklungsstellungen und im Wesentlichen vollumfänglich übergreifen.

15. Leitungsführung nach einem der vorhergehenden Ansprüche,
**dadurch gekennzeichnet, dass** der Innenteil (3) jedes Glieds (2) jeweils korrespondierende kardan- oder kugelgelenkartige Gelenkverbinder (5, 6) aufweist, welche zur mehrachsig abwinkelbaren Verbindung und zur Aufnahme von Zugkräften ausgeführt sind.

## Claims

1. A cable guide (1) comprising links (2) that are angle-adjustable multi-axially relative to each other, connected to each other in articulated fashion and arranged successively in the longitudinal direction (L) of the cable guide (1), wherein each link (2) has an inner part (3) with corresponding multi-axially angle-adjustable articulation connectors (5, 6) and a casing part (4) for peripheral delimitation of at least one guide channel (7), wherein the casing part (4) encompasses at least one segment (10), which is connected to the inner part (3) by a web (20), in a manner permitting it to be pivoted open in order to make an associated guide channel (7) accessible on the peripheral side, **characterised in that** the casing parts (4) of adjacent links (2) overlap in the longitudinal direction (L), and
**in that** a joint arrangement (30) with at least two degrees of freedom is provided between the at least one segment (10) and the web (20), by means of which the segment (10) can move transversely to the longitudinal direction (L), in particular outwards, while being pivoted open.

2. Cable guide according to Claim 1, **characterised in that** the joint arrangement (30) is located on the inside in relation to the casing part (4).

3. Cable guide according to Claim 1 or 2, **characterised in that** the joint arrangement (30) is designed as a combination of two joints, in partiuclar as a rotary and track guide with a track direction lying transverse to the axis of rotation, wherein the axis of rotation is preferably oriented essentially parallel to the longitudinal direction (L).

4. Cable guide according to Claim 3, **characterised in that** two claw-shaped joint brackets (32) project on one end of the at least one segment (10), forming a slot-like guide (33) for the curving movement of the rotary and track guide, and catch around corresponding rotatable joint areas (34), which are designed as journals and projecting from the web (20).

5. Cable guide according to Claim 4, **characterised in that** the slot-like guide (33) runs essentially in the peripheral direction of the casing part and preferably displays a constriction (35) between the two end areas of the guide for locking in two end positions.

6. Cable guide according to one of Claims 1 to 5,
**characterised in that** a snap-in projection (40), preferably with a snap-in hook (42), is provided on the end of the segment (10) that is opposite the joint arrangement (30), for engaging the peripherally nearest web, preferably on a snap-in edge (44) on the web.

7. Cable guide according to Claim 6, **characterised in that** the snap-in projection (40) reaches into a gap between the two joint brackets (32) of the peripherally nearest segment.

8. Cable guide according to one of the preceding Claims, in particular according to Claim 7, **characterised in that** the joint arrangement (30), in partiuclar each joint bracket (32), displays at least one outward-facing opening (36) for detaching the segment (10) from the web (20), and **in that** at least one projection (45) is provided on the end of the segment lying opposite the joint arrangement (30) for covering the opening of the peripherally nearest segment.

9. Cable guide according to Claim 8, **characterised in that** the opening (36) is provided in an end area of the joint arrangement (30) that corresponds to the opened end position.

10. Cable guide according to one of the preceding Claims,
**characterised in that** each segment (10) is divided into two spherical calotte areas (12, 14) in the longitudinal direction, where the first calotte area (12) displays a centre point of the sphere that essentially coincides with the centre of a ball-and-socket type joint element (5) on the inner part (3), and the second calotte area (14) can at least partially accommodate the first calotte area (12) of an adjacent link (2), and **in that** the joint arrangement (30), in partiuclar the rotary and curved guide, is provided exclusively between the first calotte area (12) and the web (20).

11. Cable guide according to Claim 10, **characterised in that** the casing part (4) of each link (2) displays several, in partiuclar three, identical segments (10), manufactured in one piece, and several, in partiuclar three, webs (20) are integrally moulded on the inner part (3) in one piece in a rotationally symmetrical arrangement, in partiuclar on the middle longitudinal section of the inner part (3).

12. Cable guide according to Claim 11, **characterised** i n **that** the webs (20) extend radially outwards and with one component in the longitudinal direction (L).

13. Cable guide according to Claim 11 or 12,**characterised in that** parts of the joint arrangement (30), in partiuclar joint areas (34) designed as journals, are integrally moulded on the outer end of each web (10), their effective length extending essentially over the entire dimension in the longitudinal direction (L) of the first calotte area (12).

14. Cable guide according to one of the preceding Claims,
**characterised in that** the casing part (4) is made up of several, preferably three, identical segments (10), each segment (10) is preferably manufactured in one piece, and each segment (10) can be pivoted open and is designed in such a way that, when the segments (10) are closed, the casing parts (4) of adjacent links (2) reach over each other in all angled positions and essentially over the entire periphery.

15. Cable guide according to one of the preceding Claims,
**characterised in that** the inner part (3) of each link (2) displays corresponding articulation connectors (5, 6) of the cardan or ball-and-socket joint type that are designed for multi-axially angle-adjustable connection and for absorption of tensile forces.

## Revendications

1. Guide-câble (1) comportant des maillons (2) respectivement ajustables en angle multiaxialement l'un par rapport à l'autre, reliés l'un à l'autre de manière articulée et disposés successivement dans un sens longitudinal (L) du guide-câble (1), chaque maillon (2) présentant une partie intérieure (3), avec des connecteurs d'articulation (5, 6) ajustables en angle, et une partie de gaine (4) pour la délimitation périphérique d'au moins un conduit de guidage (7), la partie de gaine (4) comprenant au moins un segment (10) qui est relié, de manière pivotante pour rendre accessible un conduit de guidage associé (7) du côté périphérique, à la partie intérieure (3) par une âme (20) **caractérisé**
**en ce que**
les parties de gaine (4) de maillons (2) adjacents se chevauchent dans la direction longitudinale (L), et
**en ce qu'**un agencement d'articulation (30) avec au moins deux degrés de liberté est prévu entre le au moins un segment (10) et l'âme (20), au moyen duquel le segment (10) peut se déplacer transversalement par rapport à la direction longitudinale (L), en particulier vers l'extérieur, lorsqu'il est pivoté en ouverture.

2. Guide-câble selon la revendication 1, **caractérisé en ce que** l'agencement d'articulation (30) est situé à l'intérieur par rapport à la partie de gaine (4).

3. Guide-câble selon la revendication 1 ou 2, **caractérisé en ce que** l'agencement d'articulation (30) est réalisé sous forme d'une combinaison de deux articulations, en particulier sous forme d'un guide rotatif et cintré avec une direction de courbure transversale à l'axe de rotation, l'axe de rotation étant de préférence orienté sensiblement parallèlement à la direction longitudinale (L).

4. Guide-câble selon la revendication 3, **caractérisé en ce que** deux pattes d'articulation (32) en forme de griffes s'appuient sur une extrémité du au moins un segment (10), formant un guide (33) à trou oblong pour le mouvement de courbure du guide rotatif et cintré, et s'engageant en rotation autour de zones d'articulation (34) correspondantes qui sont conçues comme des tourillons et font saillie sur l'âme (20).

5. Guide-câble selon la revendication 4, **caractérisé en ce que** le guide (33) à trou oblong s'étend essentiellement dans la direction périphérique de la partie de gaine et présente de préférence un étranglement (35) entre les deux zones d'extrémité du guide pour le verrouillage en deux positions finales.

6. Guide-câble selon l'une des revendications 1 à 5, **caractérisé**
**en ce que** sur l'extrémité du segment (10) opposée à l'agencement d'articulation (30) est prévue une saillie d'encliquetage (40), de préférence avec un crochet d'encliquetage (30), engageant l'âme la plus proche dans le sens périphérique, de préférence sur un bord d'encliquetage (44) sur l'âme.

7. Guide-câble selon la revendication 6, **caractérisé en ce que** la saillie d'encliquetage (40) pénètre dans un interstice entre les deux pattes d'articulation (32) du segment le plus proche dans le sens périphérique.

8. Guide-câble selon l'une quelconque des revendications précédentes, notamment selon la revendication 7, **caractérisé**
**en ce que** l'agencement d'articulation (30), en particulier chaque pattes d'articulation (32), présente au moins une ouverture (36) orientée vers l'extérieur pour détacher le segment (10) de l'âme (20), et en ce que au moins une saillie (45) est prévue sur l'extrémité du segment opposée à l'ensemble d'articulation (30) pour recouvrir l'ouverture du segment le plus proche dans le sens périphérique.

9. Guide-câble selon la revendication 8, **caractérisé en ce que** l'ouverture (36) est prévue dans une zone d'extrémité correspondant à la position finale ouverte de l'agencement d'articulation (30).

10. Guide-câble selon l'une quelconque des revendications précédentes, **caractérisé en ce que** chaque segment (10) est divisé en deux zones de calotte sphérique (12, 14) dans la direction longitudinale, la première zone de calotte (12) présentant un point central de la sphère qui coïncide essentiellement avec le centre d'un élément d'articulation (5) du type à rotule sur la partie intérieure (3), et la deuxième zone de calotte (14) pouvant au moins partiellement recevoir la première zone de calotte (12) du maillon (2) adjacent, et **en ce que** l'agencement d'articulation (30), en particulier le rotatif et cintré, est prévu seulement entre la première zone de calotte (12) et l'âme (20).

11. Guide-câble selon la revendication 10, **caractérisé en ce que** la partie de gaine (4) de chaque maillon (2) présente plusieurs segments (10) identiques, en particulier trois segments (10), fabriqués d'une seule pièce, et plusieurs âmes (20), en particulier trois âmes (20), sont moulés d'une seule pièce sur la partie intérieure (3), de manière symétrique en révolution, en particulier sur la section longitudinale médiane de la pièce intérieure (3).

12. Guide-câble selon la revendication 11, **caractérisé en ce que** les âmes (20) s'étendent radialement vers l'extérieur et avec un composant dans la direction longitudinale (L).

13. Guide-câble selon la revendication 11 ou 12, **caractérisé en ce que** des parties de l'agencement d'articulation (30), en particulier des zones d'articulation (34) conçues comme des tourillons, sont moulées d'une seul pièce sur l'extrémité extérieure de chaque âme (10), leur longueur effective s'étendant essentiellement sur toute la dimension dans la direction longitudinale (L) de la première zone de calotte (12).

14. Guide-câble selon l'une quelconque des revendications précédentes, **caractérisé en ce que** la partie de gaine (4) est constituée de plusieurs segments (10) identiques, de préférence trois, chaque segment (10) étant de préférence fabriqué d'une seule pièce (10), et chaque segment (10) étant pivotant et conçu de telle sorte que, lorsque les segments (10) sont fermés, les parties de gaine (4) des maillons (2) adjacents s'étendent l'une sur l'autre dans toutes les positions angulaires et essentiellement sur leur périphérie entière.

15. Guide-câble selon l'une quelconque des revendications précédentes, **caractérisé en ce que** la partie intérieure (3) de chaque maillon (2) présente des connecteurs d'articulation (5, 6) correspondants du type cardan ou à rotule qui sont conçus pour une connexion ajustable en angle multiaxialement et pour l'absorption de forces de traction.
